# EUROPEAN PATENT SPECIFICATION

(11) **EP 1 618 744 B1**
(45) Date of publication and mention of the grant of the patent: **05.09.2007**
(21) Application number: 04727087.1
(22) Date of filing: 13.04.2004
(51) Int. Cl.: H04N 7/26

(54) **VIDEO TRANSCODING**
VIDEOTRANSKODIERUNG
TRANSCODAGE VIDEO

(30) Priority: 17.04.2003 EP 03101052
(43) Date of publication of application: 25.01.2006
(73) Proprietor: Koninklijke Philips Electronics N.V., 5621 BA Eindhoven (NL)
(72) Inventor: BURAZEROVIC, Dzevdet, NL-5656 AA Eindhoven (NL)
(74) Representative: Groenendaal, Antonius W. M.
(86) International application number: PCT/IB2004/050427
(87) International publication number: WO 2004/093461

(56) References cited:
- EP-A- 1 032 211
- WO-A-99/29113
- GB-A- 2 369 952

## Description

### FIELD OF THE INVENTION

The invention relates to a video transcoder and method of video transcoding therefor, and in particular but not exclusively to video transcoding of an H. 264 video signal to an MPEG2 video signal.

### BACKGROUND OF THE INVENTION

In recent years, the use of digital storage and distribution of video signals have become increasingly prevalent. In order to reduce the bandwidth required to transmit digital video signals, it is well known to use efficient digital video encoding comprising video data compression whereby the data rate of a digital video signal may be substantially reduced.

In order to ensure interoperability, video encoding standards have played a key role in facilitating the adoption of digital video in many professional-and consumer applications. Most influential standards are traditionally developed by either the International Telecommunications Union (TTLT-T) or the MPEG (Motion Pictures Experts Group) committee of the ISO/IEC (the International Organization for Standardization/tlie International Electrotechnical Committee). The ITLT-T standards, known as recommendations, are typically aimed at real-time communications (e. g. videoconferencing), while most MPEGstandards are optimized for storage (e. g. for Digital Versatile Disc (DVD)) and broadcast (e. g. for Digital Video Broadcast (DVB) standard).

Currently, one of the most widely used video compression techniques is known as the MPEG-2 (Motion Picture Expert Group) standard. MPEG-2 is a block based compression scheme wherein a frame is divided into a plurality of blocks each comprising eight vertical and eight horizontal pixels. For compression of luminance data, each block is individually compressed using a Discrete Cosine Transform (DCT) followed by quantization which reduces a significant number of the transformed data values to zero. For compression of chrominance data, the amount of chrominance data is usually first reduced by down-sampling, such that for each four luminance blocks, two chrominance blocks are obtained (4: 2: 0 format), that are similarly compressed using the DCT and quantization. Frames based only on intra-frame compression are known as Intra Frames(1-Frames).

In addition to intra-frame compression, MPEG-2 uses inter-frame compression to further reduce the data rate. Inter-frame compression includes generation of predicted frames(P-frames) based on previous1-frames. In addition, I and P frames are typically interposed by Bidirectional predicted frames(B-frames), wherein compression is achieved by only transmitting the differences between theB-frame and surrounding I-and P-frames. In addition, MPEG-2 uses motion estimation wherein the image of macro-blocks of one frame found in subsequent frames at different positions are communicated simply by use of a motion vector. Motion estimation data generally refers to data which is employed during the process of motion estimation. Motion estimation is performed to determine the parameters for the process of motion compensation or, equivalently, inter prediction. In block-based video coding as e. g. specified by standards such as MPEG-2 and H. 264, motion estimation data typically comprises candidate motion vectors, prediction block sizes (H. 264), reference picture selection or, equivalently, motion estimation type (backward, forward or bidirectional) for a certain macro-block, among which a selection is made to form the motion compensation data that is actually encoded.

As a result of these compression techniques, video signals of standard TV studio broadcast quality level can be transmitted at data rates of around 2-4 Mbps.

Recently, a new ITU-T standard, known as H. 26L, has emerged. H. 26L is becoming broadly recognized for its superior coding efficiency in comparison to the existing standards such as MPEG-2. Although the gain of H. 26L generally decreases in proportion to the picture size, the potential for its deployment in a broad range of applications is undoubted. This potential has been recognized through formation of the Joint Video Team (JVT) forum, which is responsible for finalizing H. 26L as a new joint ITU-T/MPEG standard. The new standard is known as H. 264 or MPEG-4 AVC (Advanced Video Coding).

Furthermore, H. 264-based solutions are being considered in other standardization bodies, such as the DVB and DVD Forums.

The H. 264 standard employs the same principles of block-based motion-compensated hybrid transform coding that are known from the established standards such as MPEG-2. The H. 264 syntax is, therefore, organized as the usual hierarchy of headers, such as picture-, slice-and macro-block headers, and data, such as motion-vectors, block-transform coefficients, quantizer scale, etc. However, the H. 264 standard separates the Video Coding Layer (VCL), which represents the content of the video data, and the Network Adaptation Layer (NAL), which formats data and provides header information.

Furthermore, H264 allows for a much increased choice of encoding parameters. For example, it allows for a more elaborate partitioning and manipulation of16x16 macro-blocks whereby e.g. motion compensation process can be performed on segmentations of a macro-block as small as 4x4 in size. Also, the selection process for motion compensated prediction of a sample block may involve a number of stored, previously decoded pictures (also known as frames), instead of only the adjacent pictures (or frames). Even with intra coding within a single frame, it is possible to form a prediction of a block using previously decoded samples from the same frame. Also, the resulting prediction error following motion compensation may be transformed and quantized based on a 4x4 block size, instead of the traditional8x8 size.

MPEG-2 is widely used for digital video distribution, storage and playback and as a new video encoding standard, such as H. 264, is rolled out, it is advantageous to provide means for interfacing equipment using the new standard and equipment using the existing standard. Specifically, due to the large application areas of MPEG-2 and H. 264, there will be a growing demand for cheap and efficient methods of converting between these two formats. In particular, converting H. 264 to the MPEG-2 will be needed to extend the lifetime of the existingMPEG-2 based system and to allow H. 264 to be gradually introduced to existing video systems.

Accordingly, transcoders for converting between different video standards, and in particular between H. 264 and MPEG-2 video standards, would be advantageous.

A method for converting an H. 264 video signal to MPEG-2 format is to fully decode it in an H. 264 decoder followed by re-encoding of the decoded signal in an MPEG-2 encoder. However, this method has a major disadvantage in that it requires considerable resources. A cascaded implementation tends to be complex and expensive as both full decoder and encoder functionality needs to be implemented separately. This may for example make it impractical for consumer real-time implementations, as the required computational resources render the approach prohibitively expensive and complex. Generally, independent decoding and encoding of video signals may also lead to degradation of video quality as decisions taken during the re-encoding do not take into account the parameters of the original encoding.

Accordingly, known transcoders tend to be complex, expensive, inflexible, resource demanding, inefficient, have high delays, reduced data rate compatibility and/or have sub-optimal performance. Hence, an improved system for transcoding would be advantageous.

EP 1 032 211 describes a method of transcoding from H261 to MPEG-4 wherein motion vectors for blocks of the H261 signal are used as initial values for a search for motion vectors for blocks of the MPEG-4 signal. Account is taken of the fact that the maximum size of the motion vectors can be smaller in one standard than the other. Nothing is said about differences of block sizes. The minimum block size of H261 is not smaller than that of MPEG-4. In addition the motion vectors of the H261 are applied to support frame rate reduction, conversion of intra coded pictures to inter coded pictures and spatial scaling.

WO99/29113 also describes transcoding wherein motion vectors for blocks of the original signal are used to obtain motion vectors for blocks of the transcoded signal. Motion vectors are scaled if necessary due to different time bases. Use of blocks of different size is not described.

GB 2 369952 also describes transcoding wherein motion vectors for blocks of the original signal are used to obtain motion vectors for blocks of the transcoded signal. Differences in resolution of the motion vectors are accounted for.

Motion estimation data of a video signal may be used in a transcoding process despite motion estimation parameters of one format not having a direct correspondence in a second video encoding format. Thus, the inventor has realized that motion estimation data may be used in a transcoding process between two formats having different sets of motion estimation options. For example, the step of generating the second motion estimation data may comprise converting the first motion estimation data into motion estimate data parameters corresponding to the motion estimation options of the second video encoding format and determining the second motion estimation data in response to the motion estimate data parameters.

The first video encoding format may be a first video encoding standard, like the second video encoding format may be a second video encoding standard.

This allows for a transcoder with reduced complexity, cost, reduced resource requirements, increased flexibility, reduced delay, increased data rate capability and/or improved performance. Specifically, the process required for determining motion estimation data for the encoding of the decoded signal may be significantly facilitated by generation of the second motion estimation data based on the first motion estimation data despite the standards comprising different motion estimation options. For example, the operations required for determining suitable motion estimation reference blocks may be significantly reduced by being based on the motion estimation blocks used in the first video signal and comprised in the first motion estimation data. This allows for an implementation with less computational requirements thereby allowing for a cheaper implementation, reduced power consumption and/or reduced complexity. Alternatively or additionally, the reduced computational requirements may allow for an implementation having a low delay and/or a transcoder having a capability for real-time processing of higher data rates. The use of the first motion estimation data may furthermore improve the accuracy of the second motion estimation data and thus result in improved encoded video quality of the encoded picture.

For most video encoding standards, the encoding process is significantly more complex and resource demanding than a decoding process. Motion estimation is typically one of the most complex and resource demanding processes of video encoding, and therefore by facilitating motion estimation in a transcoder a very significant improvement can be obtained.

Accordingly, re-use of motion vectors of the original signal specifically allows for an improvement and/or facilitation of the most critical aspect of transcoding.

The means for extracting the first motion estimation data from the first video signal may be an integral part of the means for decoding the first video signal. For example, the first motion estimation data may automatically be generated and extracted as a part of the decoding process.

### SUMMARY OF THE INVENTION

Accordingly, the invention seeks to provide an improved system for transcoding and preferably seeks to mitigate, alleviate or eliminate one or more of the above-mentioned disadvantages singly or in any combination.

According to a first aspect of the invention, there is provided a video transcoder according to Claim 1.

According to a feature of the invention, the second video encoding format comprises a different set of possible prediction block sizes than the first video encoding format. Hence, the invention allows for a transcoder with low computational requirements by generating second motion estimation data in response to first motion estimation data despite the associated video encoding formats having different sets of possible prediction sizes. For example, the first video signal may comprise prediction block sizes smaller than what is possible for the transcoded signal in accordance with the second video format. However, these smaller prediction block sizes may be used to generate motion estimation data which is in accordance with the second video standard, thereby significantly facilitating the motion estimation processing of the means for encoding.

According to a different feature of the invention, the second video encoding format comprises a different set of possible reference pictures than the first video encoding format. Hence, the invention allows for a transcoder with low computational requirements by generating second motion estimation data in response to first motion estimation data despite the associated video encoding formats having different sets of possible reference pictures. For example, the first video signal may comprise reference pictures which are at a further distance from the picture being encoded than what is possible for the transcoded signal in accordance with the second video format. However, these more distant reference pictures may be used to generate motion estimation data which is in accordance with the second video format thereby significantly facilitating the motion estimation processing of the means for encoding.

According to a different feature of the invention, the second video encoding format allows for a different number of prediction blocks to be used for an encoding block than the first video encoding format. Hence, the invention allows for a transcoder with low computational requirements by generating second motion estimation data in response to first motion estimation data despite the associated video encoding formats allowing for different numbers of prediction blocks for an encoding block. For example, an encoding block may be a macro-block and the first video signal may comprise a higher number of prediction blocks used for a given macro-block than what is possible for the transcoded signal in accordance with the second video format. However, these additional prediction blocks may be used to generate motion estimation data which is in accordance with the second video format thereby significantly facilitating the motion estimation processing of the means for encoding.

According to a different feature of the invention, the means for converting comprises means for projecting a first motion estimation block position of a first reference picture to a second motion estimation block position in a second reference picture. For example, the means for encoding may comprise means for determining a first motion estimation block position in a first reference picture by projection of a second motion estimation block position in a second reference picture. A motion estimation block position in the first motion estimation data related to a given reference picture may be used to determine a motion estimation block position in the second motion estimation data related to a different reference picture by projecting the motion estimation block position between the reference pictures. This allows for a very efficient and/or low complexity approach to determining the second motion estimation data. This is particularly suitable for applications wherein the first video encoding standard allows for a larger variety of reference pictures than the second video encoding standard, as motion estimation data of reference pictures in the first video signal not allowed according to the second video encoding standard may be used by projecting the motion estimation block positions onto the reference pictures that are allowed. Hence, in some applications the projection may enable the reuse of motion estimation data between video encoding standards having a different set of motion estimation options and thus enable one, more or all of the previously mentioned advantages.

According to a different feature of the invention, the first reference picture has a different relative position to a picture for encoding than the second reference picture. This allows for video transcoding re-using motion estimation data from a video signal having a larger distance between a picture and the associated reference pictures in encoding a video signal in accordance with a video standard not allowing such a distance between the video encoding standard.

According to a different feature of the invention, the first reference picture is not neighbouring the picture for encoding and the second reference picture is neighbouring the picture for encoding. This provides for a very efficient, low complexity and/or efficient reuse of motion estimation data of non-neighbouring reference pictures to be reused in neighbouring reference pictures. This is particularly suitable in for example H.264 (which permits non-neighbour reference pictures) to MPEG-2 (which only permits neighbour reference pictures) transcoders. In this case, motion estimation data from non-neighbouring reference pictures may be reused in the MPEG-2 encoding.

According to a different feature of the invention, the means for projecting is operable to perform the projection by scaling of at least one motion vector of the first motion estimation data to generate least one motion vector of the second motion estimation data. This provides for a very efficient, accurate and/or low complexity implementation of the means for projecting.

According to a different feature of the invention, the means for converting further comprises means for aligning the second motion estimation block position with a block position framework of the second video encoding standard. This facilitates, and in some applications enable, the reuse of motion estimation data where the first and second video encoding standard have different block position frameworks.

According to a different feature of the invention, the first video compensation data comprises at least a first prediction block smaller than a minimum prediction block size of the second video encoding standard and the means for converting is operable to select a prediction block of the second motion estimation data such that it comprises the first prediction block. This facilitates, and in some applications enable, the transcoding process where the prediction block sizes according to the first video encoding format may be smaller than allowed in the second video format and ensures that the prediction blocks used are comprised in prediction blocks used to determine the second motion estimation data.

According to a different feature of the invention, the means for converting is operable to select a prediction block of the second motion estimation data by grouping a plurality of prediction blocks of the first motion estimation data together in a group and to determine a single motion vector for the group. This further facilitates and reduces the complexity of the transcoding process.

According to a different feature of the invention, the means for converting is operable to select a prediction block of the second motion estimation data by selecting a subset of a plurality of prediction blocks of the first motion estimation data in response to prediction block sizes of the plurality of prediction blocks. This further facilitates and reduces the complexity of the transcoding process.

According to a different feature of the invention, the means for encoding is operable to generate the transcoded signal with a different picture size than a picture size of the decoded signal. This allows for an efficient transcoding which furthermore enables resizing of the pictures.

According to a different feature of the invention, the means for encoding is operable to generate the transcoded signal with a different picture frequency than a picture frequency of the decoded signal. This allows for an efficient transcoding which furthermore enables a modification of the picture frequency.

Preferably, the first video encoding standard is the International Telecommunications Union recommendation H.264 or equivalently the ISO/IEC 14496-10 AVC standard as defined by ISO/IEC (the International Organization for Standardization/ the International Electrotechnical Committee). The second video standard is preferably the International Organization for Standardization/ the International Electrotechnical Committee Motion Picture Expert Group MPEG-2 standard. Hence, the invention enables an efficient transcoder for transcoding an H.264 video signal to an MPEG-2 video signal.

According to a second aspect of the invention, there is provided a method of transcoding comprising: receiving a first video signal encoded in accordance with a first video encoding format; decoding the first video signal in accordance with the first video encoding format to generate a decoded signal; extracting first motion estimation data from the first video signal, the first motion estimation data being in accordance with the first video encoding format; generating second motion estimation data from the first motion estimation data; the second motion estimation data being in accordance with a second video encoding format having a different set of motion estimation options than the first video encoding format; and encoding the decoded signal in accordance with the second video encoding format using the second motion estimation data to generate a transcoded video signal.

These and other aspects, features and advantages of the invention will be apparent from and elucidated with reference to the embodiment(s) described hereinafter.

### BRIEF DESCRIPTION OF THE DRAWINGS

An embodiment of the invention will be described, by way of example only, with reference to the drawings, in which
FIG. 1 illustrates the possible partitioning of macro-blocks into motion estimation blocks in accordance with the H.264 standard;
FIG. 2 illustrates a block diagram of a transcoder in accordance with an embodiment of the invention;
FIG. 3 illustrates a flowchart of a method of transcoding a video signal from a first video encoding standard to a second video encoding standard in accordance with an embodiment of the invention;
FIG. 4 illustrates an example of a projection of a motion estimation block position of a prediction block from one reference picture to another picture in accordance with an embodiment of the invention;
FIG. 5 illustrates an example of an alignment of motion estimation block positions of a prediction block in accordance with an embodiment of the invention; and
FIG. 6 illustrates an example of selection of prediction blocks in accordance with an embodiment of the invention.

### DESCRIPTION OF PREFERRED EMBODIMENTS

The following description focuses on an embodiment of the invention applicable to a transcoder for transcoding signals of a first video standard having a high degree of freedom in selection of encoding parameters to a signal of a second video standard having a lower degree of freedom in selection of encoding parameters. In particular the description focuses on a transcoder for transcoding an H.264 encoded video signal into an MPEG-2 encoded video signal. However, it will be appreciated that the invention is not limited to this application and may be used in association with many other video encoding algorithms, specifications or standards.

In the following, references to H.264 comprise a reference to the equivalent ISO/IEC 14496-10 AVC standard.

Most established video coding standards (e.g. MPEG-2) inherently use block-based motion compensation as a practical method of exploiting correlation between subsequent pictures in video. For example, MPEG-2 attempts to predict a macro-block (16×16 pixels) in a certain picture by a close match in an adjacent reference picture. If the pixel-wise difference between a macro-block and its associated prediction block in an adjacent reference picture is sufficiently small, the difference is encoded rather than the macro-block itself. The relative displacement of the prediction block with respect to the coordinates of the actual macro-block is indicated by a motion vector. The motion vector is separately coded and included in the encoded video data stream. In MPEG-2 each 16×16 block, or macro-block, is typically predicted by a single prediction block of the same size, which is retrieved from either the previous or the subsequent picture, or from both, depending on the picture type.

New video coding standards such as H.26L, H.264 or MPEG-4 AVC promise improved video encoding performance in terms of an improved quality to data rate ratio. Much of the data rate reduction offered by these standards can be attributed to improved methods of motion compensation. These methods mostly extend the basic principles of previous standards, such as MPEG-2.

One relevant extension is the use of multiple reference pictures for prediction, whereby a prediction block may originate in more distant future- or past pictures. This allows for suitable prediction blocks being found in more distant pictures and thus increases the probability of finding a close match.

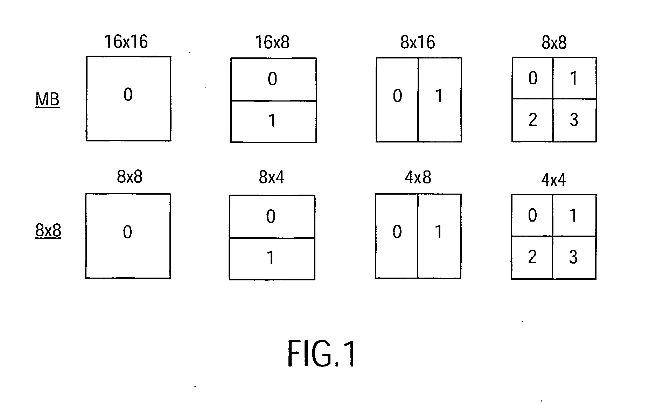

Another and even more efficient extension is the possibility of using variable block sizes for prediction of a macro-block. Accordingly, a macro-block (still 16×16 pixels) may be partitioned into a number of smaller blocks and each of these sub-blocks can be predicted separately. Hence, different sub-blocks can have different motion vectors and can be retrieved from different reference pictures. The number, size and orientation of prediction blocks are uniquely determined by definition of inter prediction modes, which describe possible partitioning of a macro-block into 8x8 blocks and further partitioning of each of the 8x8 sub-blocks. FIG. 1 illustrates the possible partitioning of macro-blocks into prediction blocks in accordance with the H.264 standard.

Thus, H.264 not only allows more distant pictures to serve as references for prediction but also allows for a partition of a macro-block into smaller blocks and a separate prediction to be used for each of the sub-blocks. Consequently, each prediction sub-block can in principle have a distinct associated motion vector and can be retrieved from a different reference picture. Thus, H.264 provides for a different set of possible prediction block sizes, a different set of possible reference pictures and a different number of possible prediction blocks per macro-block than MPEG-2. Specifically reference pictures are not limited to adjacent or neighbouring pictures and each macro-block may be divided into a plurality of smaller prediction blocks, each of which may have an individually associated motion vector.

As a consequence of the large application areas of MPEG-2 and H.264, there will be a growing demand for cheap and efficient methods of converting between these two formats. In particular, converting H.264 to the MPEG-2 will be needed to extend the lifetime of the existing MPEG-2 based system and to allow for H.264 equipment to be gradually introduced in existing video systems. Although such transcoding may be performed by fully decoding the H.264 signal in an H.264 decoder, followed by fully re-encoding the resulting signal in an MPEG-2 encoder, this tends to require considerable resource. While even the decoding of H.264 will typically require a large number of computations, the bottleneck of the transcoding will typically be the MPEG-2 re-encoding process and in particular the motion estimation process thereof.

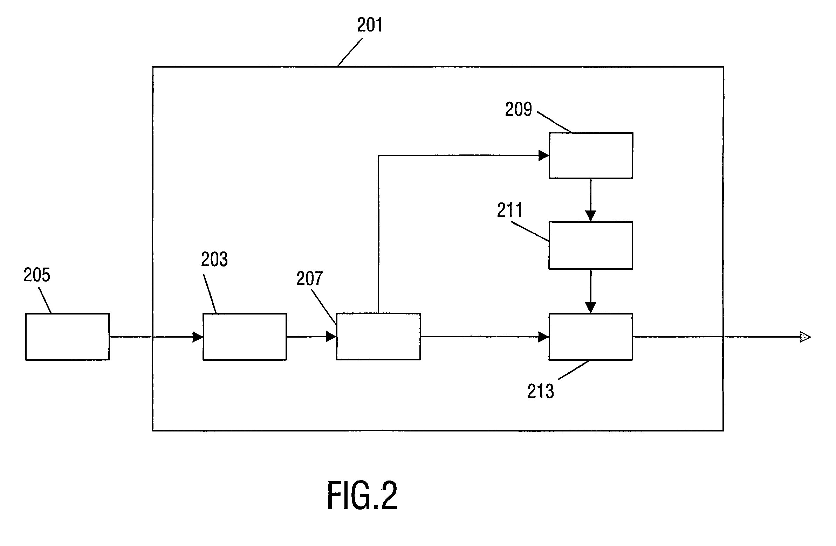

FIG. 2 illustrates a block diagram of a transcoder 201 in accordance with an embodiment of the invention. The described transcoder is operable to convert an H.264 video signal into an MPEG-2 video signal.

The transcoder comprises an interface 203, which is operable to receive an H.264 encoded video signal. In the shown embodiment, the H.264 video signal is received from an external video source 205. In other embodiments, the video signal may be received from other sources including internal video sources.

The interface 203 is coupled to an H.264 decoder 207which is operable to decode the H.264 signal to generate a decoded signal. The decoder 207 is coupled to an extraction processor 209 which is operable to extract first motion estimation data from the H.264 video signal. The extracted motion estimation data is some or all of the H.264 motion estimation data comprised in the H.264 video signal. Hence, the extracted first motion estimation data is motion estimation data which is in accordance with the H.264 standard.

It will be clear to the person skilled in the art that although the previous description and FIG. 2 illustrates the extraction processor 209 as a separate functional entity, the functionality of the extraction processor 209 may preferably be provided by the decoder 207. Thus, the first motion estimation data is preferably generated by the decoder 207 as part of the decoding process. This results in reduced complexity as the motion estimation data is anyway extracted from the H.264 signal in order to perform the decoding.

The encode processor 213 is coupled to a motion estimation data processor 211 which is operable to generate second motion estimation data that is in accordance with the MPEG-2 standard, from the first motion estimation data, which is in accordance with the H.264 standard. Thus, the motion estimation data have different set of motion estimation options and specifically the H.264 video signal may use more and further distant reference pictures as well as more and smaller prediction blocks than what is allowed in accordance with the MPEG-2 standard.

The motion estimation data processor 211 processes the first motion estimation data such as to provide motion estimation data which is allowed in accordance with the MPEG-2 standard. Specifically, the motion estimation data processor 211 may convert the motion estimation data of the H.264 signal into motion estimation data options provided for by MPEG-2.

In the preferred embodiment, initial estimates of MPEG-2 motion estimation data is generated directly by a mathematical, functional or algorithmic conversion followed by a fine tuning and search based on the initial estimates, whereby the final MPEG-2 motion estimation data may be generated. Basing the motion estimation data determination of the MPEG-2 signal on the motion estimation data from the H.264 signal results in significantly reduced complexity and resource requirement of the motion estimation data determination process, and may furthermore result in improved motion estimation as the original information of the H.264 signal is taken into account.

The motion estimation data processor 211 is coupled to an MPEG-2 encoder 213. The MPEG-2 encoder 213 is furthermore coupled to the decoder 207 and is operable to receive the decoded signal therefrom. The MPEG-2 encoder 213 is operable to encode the decoded signal in accordance with the MPEG-2 video encoding standard using the second motion estimation data received from the motion estimation data processor 211. Hence, the encoding process is significantly facilitated, as the motion estimation processing is based on the existing motion estimation data from the original H.264 signal. The MPEG-2 encoder 213 is furthermore operable to output the resulting transcoded MPEG-2 signal from the transcoder.

In the preferred embodiment, the motion estimation data processor 211 generates the initial estimates of the MPEG-2 motion estimation data and the consequent fine tuning and search based on the initial estimates in order to generate the final motion estimation data is performed by the MPEG-2 encoder 213. In order to efficiently select the final motion estimation data among the estimates, the errors of all estimates are preferably computed and consequently compared by a suitable criterion or algorithm. An estimation error may be computed as a difference between a certain macro-block in an original picture to be encoded and an estimate of that macro-block retrieved from a corresponding reference picture, i.e. a picture that has been previously encoded (which can be the previous or the subsequent picture). Thus, for such computation both the data from the original pictures and the data from the already coded pictures may be used. The MPEG-2 encoder 213 is provided with data related to both of these pictures and typically includes the storage means for storing the intermediate encoding results. Therefore, the fine tuning and search is preferably performed in the MPEG-2 encoder 213.

Thus the described embodiment is capable of reducing the complexity of transcoding an H.264 video signal to the MPEG-2 format. Although the method still uses full H.264 decoding, it reduces the most complex part of MPEG-2 re-encoding, which is motion estimation. This is achieved by passing some motion data from the H.264 decoder to the MPEG-2 encoder.

In addition, the high-level information about the picture size, picture frequency, Group Of Pictures (GOP) structure, etc. may also be passed to the MPEG-2 encoder and re-used without modifications. This may further reduces the complexity and resource requirement of the encoder.

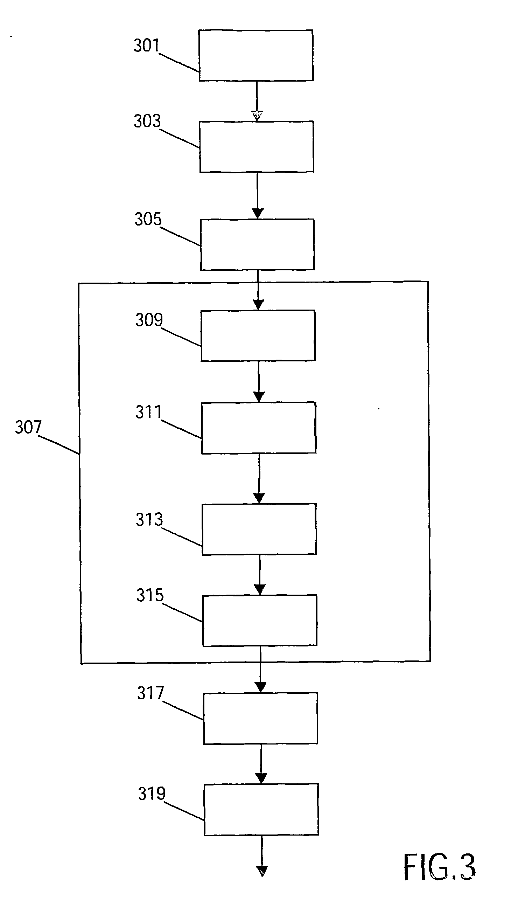

FIG. 3 illustrates a flowchart of a method of transcoding a video signal from a first video coding standard, such as H.264, to a second video encoding standard, such as MPEG-2, in accordance with an embodiment of the invention. The method is applicable to the apparatus of FIG. 2 and will be described with reference to this.

The method starts in step 301 wherein the interface 203 of the transcoder 201 receives an H.264 video signal from the external video source 205.

Step 301 is followed by step 303 wherein the H.264 video signal is fed from the interface 203 to the decoder 207 which decodes the signal in accordance with the H.264 standard to generate a decoded signal. Algorithms and methods for decoding an H.264 signal are well known in the art and any suitable method and algorithm may be used.

Step 303 is followed by step 305 wherein the extraction processor 209 extracts first motion estimation data from the H.264 video signal. In the preferred embodiment, step 303 and 305 are integrated and the first motion estimation data is extracted as part of the decoding process. In this embodiment, the decoder 207 may be considered to comprise the extraction processor 209. The motion estimation data preferably comprises information on prediction blocks, motion vectors and reference pictures used for the encoding and decoding of the H.264 signal.

Step 305 is followed by step 307 wherein the motion estimation data processor 211 generates second motion estimation data based on the first motion estimation data. The second motion estimation data is in accordance with the MPEG-2 standard, and may thus be used for encoding of an MPEG-2 signal based on the decoded signal.

In the described embodiment step 307 comprises a number of sub-steps 309-315.

In step 309, a first motion estimation block position of a first reference picture is projected to a second motion estimation block position in a second reference picture. In the preferred embodiment, a motion estimation block position of a prediction block in a reference picture is projected to a motion estimation block position in a reference picture having a different offset from the current picture. Preferably, motion estimation block positions in reference pictures of the H.264 video signal which are not adjacent to the current picture are projected onto pictures which are adjacent (or neighbouring) the current picture. The projection is preferably by scaling of a motion vector.

More specifically for the preferred embodiment, each prediction sub-block of a macro-block can in H.264 originate from a different reference picture. In MPEG-2, however, only the most recently decoded picture can be referenced during motion compensation and prediction blocks are thus limited to being in the adjacent or neighboring pictures. Therefore, step 309 comprises projecting all prediction sub-blocks from distant reference pictures to the perspective of the most recent reference picture. This is achieved by scaling the corresponding motion vectors. In the preferred embodiment, the prediction blocks themselves are not used and only the position and size is used. By projecting the prediction block position of a distant picture to a position in an adjacent picture, a position likely to match a block in the adjacent picture corresponding to the original prediction block is determined.

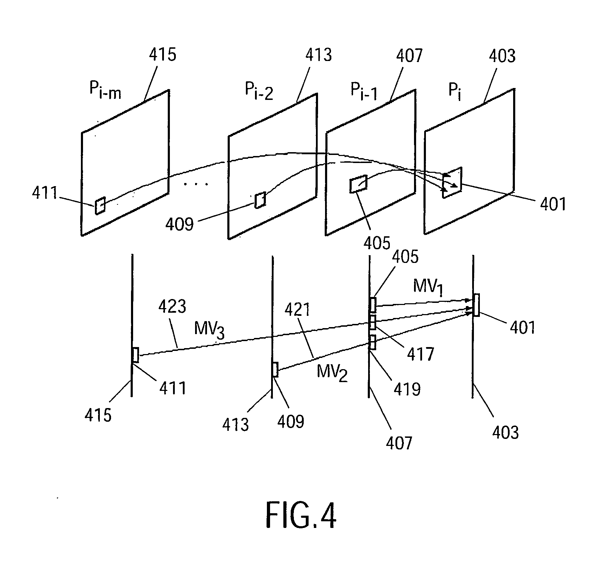

FIG. 4 illustrates a specific example of a projection of a motion estimation block position of a prediction block from one reference picture to another picture. The drawing shows an example wherein an upper half of a macro-block 401 in a picture Pᵢ 403 is predicted from a prediction block 405 from the picture Pᵢ₋₁ 407 while the two bottom quarters of the same macro-block 401 are predicted by prediction blocks 409, 411 from other pictures Pᵢ₋₂ 413 and Pᵢ₋ₘ 415. The largest prediction block 405 is already in the most recent reference picture Pᵢ₋₁ 403 and therefore meets the MPEG-2 standard in this respect. The other two prediction blocks 409, 411 are in more distant reference pictures 413, 415, and are therefore projected to the adjacent picture 407. The projections of the two prediction blocks 409, 411 are indicated by additional blocks 417, 419 in the adjacent picture 403.

The projections are obtained by scaling the motion vectors MV₂ 421 and MV₃ 423 by factors which are in proportion to the respective distances of the corresponding pictures from the target picture. For example, the time interval between picture Pᵢ₋₂ 413 and picture Pᵢ 403 is twice that of the time interval between picture Pᵢ₋₁ 407 and picture Pᵢ 403. Accordingly, the movement of the block 409 within the picture is likely to be halfway between the position of the block in picture Pᵢ₋₂ 413 and the position in picture Pᵢ 403 (assuming linear movement). Consequently, the motion vector MV₂ 421 is halved. The scaled motion vectors may thus point to prediction blocks in the adjacent picture which are likely to be suitable candidates for use as prediction blocks for MPEG-2 encoding.

Step 309 is followed by step 311, wherein the generated motion estimation block positions are aligned to a block position framework of the MPEG-2 encoding standard. The alignment is preferably achieved by quantising the determined motion estimation block positions in accordance with the framework of the MPEG-2 encoding standard. The quantisation may for example comprise a truncation of the determined motion estimation block positions.

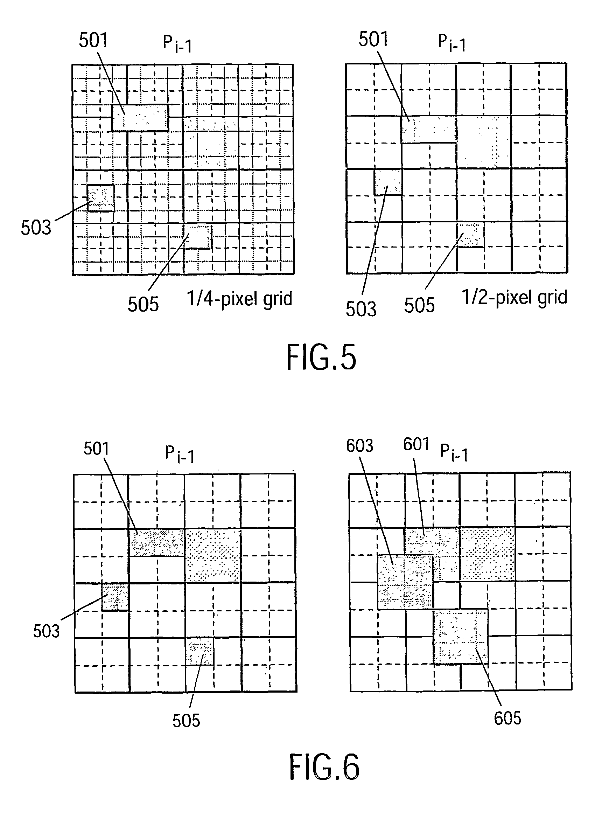

Specifically, H.264 allows for interpolation of the prediction blocks with a resolution of 1/4 pixel (and higher profiles of the standard may even use 1/8-pixel resolution), whereas MPEG-2 uses 1/2-pixel resolution for prediction block estimation positions. In the preferred embodiment, step 311 therefore comprises translating the 1/4-pixel coordinates of a motion estimation block position to the nearest valid integer or 1/2-pixel coordinates, e.g. in the direction of the position of the macro-block which is being predicted. This is illustrated in FIG. 5. The left-hand figure depicts possible positions of three prediction blocks 501, 503, 505 after the projection of step 309. The right-hand picture illustrates the determined positions of the same three prediction blocks 501, 503, 505 after an adjustment to the ½ pixel grid of MPEG-2 has been performed.

Step 311 is followed by step 313, wherein MPEG-2 prediction blocks are selected that comprises the prediction blocks determined in step 307 and/or 309. Specifically, in MPEG-2, a macro-block must be predicted as a whole (one motion vector per macro-block). In H.264, a plurality of smaller prediction blocks may be used for a given macro-block. Thus, the first video compensation data may comprise one or more prediction blocks which are smaller than a minimum prediction block size ( corresponding to a macro block) of MPEG-2. Therefore in step 311, prediction block candidates are determined for a whole macro-block such that the determined prediction blocks of the second motion estimation data comprises the prediction blocks determined in step 309 and/or 311. Thus prediction blocks having a size equal to a macro-block are determined in such a way that the co-ordinates of a part of each candidate coincide with the co-ordinates of a previously determined projection of a H.264 prediction sub-block.

FIG. 6 illustrates a specific example of selection of prediction blocks in accordance with an embodiment of the invention. The left hand picture shows the prediction block positions determined in step 311 of the three prediction blocks 501, 503, 505 of FIG. 5. The right-hand drawing shows the MPEG-2 compliant prediction block candidates 601, 603, 605 which all have a size equal to a macro-block. For example, the position of the prediction block candidate 603 is such that its left-bottom quarter coincides with the position of prediction block 503 in the left-hand drawing. Similarly, the position of the right-bottom quarter of the prediction block candidate 605 and that of the upper-half of the prediction block candidate 601 coincide with the positions of the corresponding prediction blocks 605, 601 respectively in the left-hand drawing.

Accordingly, a number of prediction block candidates which are in accordance with the MPEG-2 standard have been determined from the motion estimation data of the H.264 video signal by simple processing and using low complexity operations.

Step 313 is in the preferred embodiment followed by step 315. In other embodiments, step 315 may be skipped and the method continues directly in step 317. In some embodiments, step 315 may precede for example step 311, 309 or 307.

In step 305 at least one prediction block is determined by grouping the prediction blocks together. A single motion vector is determined for the group of prediction block candidates. As previously mentioned, a single macro-block may in H.264 be predicted on the basis of up to 16 4x4 blocks scattered over different reference pictures. The described method may therefore result in up to 16 candidates for MPEG-2 motion estimation. This value is preferably reduced by grouping of the determined prediction block candidates. For example, if an H.264 macro-block uses an 8x8 prediction block, which is further partitioned into smaller sub-blocks, the motion vectors of each of the smaller sub-blocks may be averaged to generate a single motion vector corresponding to the 8x8 prediction block. The averaged motion vector will in this case refer to an 8x8 prediction block, which has a high probability of being a suitable prediction block for encoding in accordance with MPEG-2, and the possible number of candidates for motion estimation will be reduced to a maximum of four prediction blocks.

Alternatively or additionally, the number of MPEG prediction block candidates may be reduced by a selection of a subset of the prediction blocks determined from the H.264 signal. The selection is preferably in response to the prediction block sizes of each of the prediction blocks of the H.264 signal. In the preferred embodiment, the subset comprises only one prediction block and a single motion vector is determined for the selected block. In some embodiments, a plurality of prediction blocks may be selected and a single motion vector may be determined for the subset, for example by averaging of the motion vectors associated with each block of the subset. The selection is preferably such that prediction blocks having larger prediction block sizes are preferred to prediction blocks having lower prediction block sizes. This allows for as large a proportion of the macro-block as possible being covered by the selected prediction block. Thus, larger prediction blocks may be preferred and smaller prediction blocks may be discarded to further reduce the number of prediction block candidates.

Step 315 (and thus step 307) is followed by step 317. In step 317, the encoder 213 encodes the decoded signal in accordance with the MPEG-2 video standard using the motion estimation data generated by the motion estimation data processor 211. Thus, a transcoded MPEG-2 video signal of the H.264 video signal from the external video source 205 is generated in step 315. The person skilled in the art will be familiar with video encoding and in particular with an MPEG-2 encoder and accordingly this will not be described in detail.

In the preferred embodiment, the generated prediction block candidates are used by the motion estimation functionality of the encoder to determine motion estimation prediction blocks. Specifically, the determined prediction block candidates for a given macro-block may all be processed, and the difference between the macro-block and each prediction block may be determined. The prediction block resulting in the lowest residual error may then be selected as the prediction block for that macro-cell. In some embodiments, the encoder 213 may furthermore perform a search for suitable prediction blocks based on the candidates determined by the motion estimation data processor 211. Hence, the determined prediction blocks and/or prediction block sizes and/or prediction block positions may be used as initial estimates from which a search is performed.

Step 317 is followed by step 319 wherein the transcoded MPEG-2 video signal is output from the transcoder. Thus, a low complexity, easy to implement transcoder with low computational requirements, high data rate capability and/ or low delay is achieved. The transcoder is particularly suitable for interfacing between H.264 and MPEG-2 video equipment.

In some embodiments, the transcoding may furthermore include a modifications of one or more of the characteristics of the video signal. For example the encoder may be operable to generate the transcoded signal with a different picture size or picture frequency than for the original (or transcoded) signal.

Specifically, the pictures coming out of the decoder (207) may be resized by the encoder (213). In this case, motion estimation data of the originally decoded pictures may be re-used for their scaled pictures. For example, in the case of up-scaling (scaling to a larger size), the motion estimation data generated for a certain macro-block in an originally decoded picture could be used for a plurality of macro-blocks corresponding to the picture region occupied by the original macro-block in the original picture. This may be achieved by what may be considered a scaling of the macro-block indices. For example, if the picture size is increased by a factor of two in each direction (horizontal and vertical), motion estimation data generated for original macro-block mb(0,0) may be used for four macro-blocks MB(0,0), MB(0,1), MB(1,0), and MB(1,1) which occupy the picture region of the transcoded picture corresponding to the picture region in the original occupied by the original macro-block.

In the case of down-scaling, the motion data generated for a plurality of original macro-blocks could be averaged to obtain motion estimation data for a single transcoded macro-block.

Similar procedures of averaging and re-using of the initial motion estimation data could be used for changing of the picture frequency (i.e. the number of pictures per second). For example, if the picture frequency is increased, motion vectors may be used for a plurality of pictures (possible with interpolation) and if the picture frequency is decreased, motion vectors from a plurality of pictures may be averaged.

Clearly, it is also conceivable to use other algorithms to re-use the motion estimation data, which may also be preferred in case non-integer scaling factors are used.

The invention can be implemented in any suitable form including hardware, software, firmware or any combination of these. However, preferably, the invention is implemented as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units and processors.

Although the present invention has been described in connection with the preferred embodiment, it is not intended to be limited to the specific form set forth herein. Rather, the scope of the present invention is limited only by the accompanying claims. In the claims, the term comprising does not exclude the presence of other elements or steps. Furthermore, although individually listed, a plurality of means, elements or method steps may be implemented by e.g. a single unit or processor. Additionally, although individual features may be included in different claims, these may possibly be advantageously combined, and the inclusion in different claims does not imply that a combination of features is not feasible and/or advantageous. In addition, singular references do not exclude a plurality. Thus references to "a", "an", "first", "second" etc do not preclude a plurality.

## Claims

1. A video transcoder (201) comprising
- means (203) for receiving a first video signal encoded in accordance with a first video encoding format;
- means (207) for decoding the first video signal in accordance with the first video encoding format to generate a decoded signal;
- means (209) for extracting first motion estimation data from the first video signal, the first motion estimation data being in accordance with the first video encoding format ;
- means (211) for generating second motion estimation data from the first motion estimation data; the second motion estimation data being in accordance with a second video encoding format having a different set of motion estimation options than the first video encoding format; and
- means (213) for encoding the decoded signal in accordance with the second video encoding format using the second motion estimation data to generate a transcoded video signal,
**characterized in that** the first video encoding format has a possible prediction block size smaller than a minimum prediction block size of the second video encoding format, the means (211) for generating being operable to use a first prediction block from the first motion estimated data to select a larger prediction block of the second motion estimation data, such that the larger prediction block comprises the first prediction block.

2. A video transcoder (201) as claimed in claim 1 wherein the means (211) for generating is operable to select a prediction block of the second motion estimation data by grouping a plurality of prediction blocks of the first motion estimation data together in a group and to determine a single motion vector for the group.

3. A video transcoder (201) as claimed in claim 2, wherein means (211) for generating is operable to determine the single motion vector by averaging motion vectors of the group.

4. A video transcoder (201) as claimed in claim 2 or 3, wherein the means (211) for generating is operable to select candidate prediction blocks of the first motion estimation data for said grouping so that coordinates of a part of each candidate coincide with the prediction block of the second motion estimation data.

5. A video transcoder (201) as claimed in claim 1 wherein the means (211) for generating is operable to select a subset of the prediction blocks of the first motion estimation data and to determine a single motion vector for the subset.

6. A video transcoder (201) as claimed in claim 5 wherein the subset has only one of the prediction blocks of the first motion estimation data and the motion vector for the subset is determined from the one of the prediction blocks of the first motion estimation data.

7. A video transcoder (201) as claimed in claim 1 wherein the second video encoding format comprises a different set of possible reference pictures than the first video encoding format.

8. A video transcoder(201) as claimed in claim 1 wherein the second video encoding format allows for a different number of prediction blocks to be used for an encoding block than the first video encoding format.

9. A video transcoder (201) as claimed in claim 1 wherein the means (211) for generating comprises means for projecting a first motion estimation block position of a first reference picture to a second motion estimation block position in a second reference picture.

10. A video transcoder (201) as claimed in claim 9 wherein the first reference picture has a different relative position to a picture for encoding than the second reference picture.

11. A video transcoder(201) as claimed in claim 9 wherein the first reference picture is not neighboring the picture for encoding and the second reference picture is neighboring the picture for encoding.

12. A video transcoder(201) as claimed in claim 9 wherein the means for projecting is operable to perform the projection by scaling of at least one motion vector of the first motion estimation data to generate least one motion vector of the second motion estimation data.

13. A video transcoder(201) as claimed in claim 6 wherein the means (211) for generating further comprises means for aligning the second motion estimation block position with a block position framework of the second video encoding format.

14. A video transcoder(201) as claimed in claim 1 wherein the means (213) for encoding is operable to generate the transcoded signal with a different picture size than a picture size of the decoded signal.

15. A video transcoder (201) as claimed in claim 1 wherein the means (213) for encoding is operable to generate the transcoded signal with a different picture frequency than a picture frequency of the decoded signal.

16. A method of transcoding comprising
- receiving (301) a first video signal encoded in accordance with a first video encoding format;
- decoding (303) the first video signal in accordance with the first video encoding format to generate a decoded signal;
- extracting (305) first motion estimation data from the first video signal, the first motion estimation data being in accordance with the first video encoding format;
- generating (307) second motion estimation data from the first motion estimation data; the second motion estimation data being in accordance with a second video encoding format having a different set of motion estimation options than the first video encoding format; and
- encoding (317) the decoded signal in accordance with the second video encoding format using the second motion estimation data to generate a transcoded video signal, **characterized in that** the first video encoding format has a possible prediction block size smaller than a minimum prediction block size of the second video encoding format, said generating comprising using a first prediction block from the first motion estimated data to select a larger prediction block of the second motion estimation data, such that the larger prediction block comprises the first prediction block.

17. A computer program enabling the carrying out of a method according to claim 16.

18. A record carrier comprising a computer program as claimed in claim 17.

## Patentansprüche

1. Videotranscodierer (201), der Folgendes umfasst:
- Mittel (203) zum Empfangen eines ersten Videosignals, codiert entsprechend einem ersten Videocodierungsformat;
- Mittel (207) zum Decodieren des ersten Videosignals entsprechend dem ersten Videocodierungsformat zum Erzeugen eines decodierten Signals;
- Mittel (209) zum Extrahieren erster Bewegungsschätzungsdaten aus dem ersten Videosignal, wobei die ersten Bewegungsschätzungsdaten dem ersten Videocodierungsformat entsprechen:
- Mittel (211) zum Erzeugen zweiter Bewegungsschätzungsdaten aus den ersten Bewegungsschätzungsdaten, wobei die zweiten Bewegungsschätzungsdaten einem zweiten Videocodierungsformat mit einem anderen Satz von Bewegungsschätzungsoptionen als das erste Videocodierungsformat entsprechen; und
- Mittel (213) zum Codieren des decodierten Signals entsprechend dem zweiten Videocodierungsformat unter Verwendung der zweiten Bewegungsschätzungsdaten zum Erzeugen eines transcodierten Videosignals,
**dadurch gekennzeichnet, dass** das erste Videocodierungsformat eine mögliche Prädiktionsblockgröße hat, die kleiner ist als eine minimale Prädiktionsblockgröße des zweiten Videocodierungsformat, wobei die Mittel (211) zum Erzeugen wirksam sind um einen ersten Prädiktionsblock aus den ersten Bewegungsschätzungsdaten zu verwenden um einen größeren Prädiktionsblock der zweiten Bewegungsschätzungsdaten zu selektieren, so dass der größere Prädiktionsblock den ersten Prädiktionsblock enthält.

2. Videotranscodierer (201) nach Anspruch 1, wobei die Mittel (211) zum Erzeugen einen Prädiktionsblock der zweiten Bewegungsschätzungsdaten selektieren, und zwar durch Gruppierung einer Anzahl Prädiktionsblöcke der ersten Bewegungsschätzungsdaten zu einer Gruppe und zum Bestimmen eines einzigen Bewegungsvektors für die Gruppe.

3. Videotranscodierer (201) nach Anspruch 2, wobei Mittel (211) zum Erzeugen den einzigen Bewegungsvektor bestimmen, und zwar durch Mittelwertbestimmung der Bewegungsvektoren der Gruppe.

4. Videotranscodierer (201) nach Anspruch 2 oder 3, wobei die Mittel (211) zum Erzeugen Kandidatenprädiktionsblöcke der ersten Bewegungsschätzungsdaten für die genannte Gruppierung selektieren, so dass Koordinaten eines Teils jedes Kandidaten mit dem Prädiktionsblock der zweiten Bewegungsschätzungsdaten zusammenfallen.

5. Videotranscodierer (201) nach Anspruch 1, wobei die Mittel (211) zum Erzeugen einen Subsatz der Prädiktionsblöcke der ersten Bewegungsschätzungsdaten selektieren und einen einzigen Bewegungsvektor für den Subsatz bestimmen.

6. Videotranscodierer (201) nach Anspruch 5, wobei der Subsatz nur einen einzigen Block der Prädiktionsblöcke der ersten Bewegungsschätzungsdaten hat und der Bewegungsvektor für den Subsatz aus dem einen der Prädiktionsblöcke der ersten Bewegungsschätzungsdaten bestimmt wird.

7. Videotranscodierer (201) nach Anspruch 1, wobei das zweite Videocodierungsformat einen anderen Satz möglicher Bezugsbilder als das erste Videocodierungsformat aufweist.

8. Videotranscodierer (201) nach Anspruch 1, wobei das zweite Videocodierungsformat eine andere Anzahl Prädiktionsblöcke ermöglicht, die für einen Codierungsblock verwendet werden sollen als das erste Videocodierungsformat.

9. Videotranscodierer (201) nach Anspruch 1, wobei die Mittel (211) zum Erzeugen Mittel zum Projizieren einer ersten Bewegungsschätzungsblockposition eines ersten Bezugsbildes auf eine zweite Bewegungsschätzungsblockposition in einem zweiten Bezugsbild aufweisen.

10. Videotranscodierer (201) nach Anspruch 9, wobei das erste Bezugsbild eine andere relative Position gegenüber einem Bild zur Codierung hat als das zweite Bezugsbild.

11. Videotranscodierer (201) nach Anspruch 9, wobei das erste Bezugsbild nicht an das Bild zur Codierung grenzt und das zweite Bezugsbild an das Bild zur Codierung grenzt.

12. Videotranscodierer (201) nach Anspruch 9, wobei die Mittel zum Projizieren die Projektion durch Skalierung wenigstens eines Bewegungsvektors der ersten Bewegungsschätzungsdaten durchführen um wenigstens einen Bewegungsvektor der zweiten Bewegungsschätzungsdaten zu erzeugen.

13. Videotranscodierer (201) nach Anspruch 6, wobei die Mittel (211) zum Erzeugen weiterhin Mittel aufweisen zum Ausrichten der zweiten Bewegungsschätzungsblockposition mit einem Blockpositionsrahmen des zweiten Videocodierungsformat.

14. Videotranscodierer (201) nach Anspruch 1, wobei die Mittel (213) zum Codieren das transcodierte Signal mit einer anderen Bildgröße erzeugen als einer Bildgröße des decodierten Signals.

15. Videotranscodierer (201) nach Anspruch 1, wobei die Mittel (213) zum Codieren das transcodierte Signal mit einer anderen Bildfrequenz als einer Bildfrequenz des decodierten Signals erzeugen.

16. Verfahren zum Transcodieren, wobei dieses Verfahren die nachfolgenden Verfahrensschritte umfasst:
- das Empfangen (301) eines ersten Videosignals, codiert entsprechend einem ersten Videocodierungsformat;
- das Decodieren (303) des ersten Videosignals entsprechend dem ersten Videocodierungsformat zum Erzeugen eines decodierten Signals;
- das Extrahieren (305) erster Bewegungsschätzungsdaten aus dem ersten Videosignal, wobei die ersten Bewegungsschätzungsdaten dem ersten Videocodierungsformat entsprechen:
- das Erzeugen (307) zweiter Bewegungsschätzungsdaten aus den ersten Bewegungsschätzungsdaten, wobei die zweiten Bewegungsschätzungsdaten einem zweiten Videocodierungsformat mit einem anderen Satz von Bewegungsschätzungsoptionen als das erste Videocodierungsformat entsprechen; und
- das Codieren (317) des decodierten Signals entsprechend dem zweiten Videocodierungsformat unter Verwendung der zweiten Bewegungsschätzungsdaten zum Erzeugen eines transcodierten Videosignals,
**dadurch gekennzeichnet, dass** das erste Videocodierungsformat eine mögliche Prädiktionsblockgröße hat, die kleiner ist als eine minimale Prädiktionsblockgröße des zweiten Videocodierungsformats, wobei das Erzeugen die Verwendung eines ersten Prädiktionsblocks aus den ersten Bewegungsschätzungsdaten umfasst um einen größeren Prädiktionsblock der zweiten Bewegungsschätzungsdaten zu selektieren, so dass der größere Prädiktionsblock den ersten Prädiktionsblock enthält.

17. Computerprogramm, das die Durchführung eines Verfahrens nach Anspruch 16 ermöglicht.

18. Aufzeichnungsträger mit einem Computerprogramm nach Anspruch 17.

## Revendications

1. Transcodeur vidéo (201) comprenant
- un moyen (203) pour recevoir un premier signal vidéo codé selon un premier format de codage vidéo ;
- un moyen (207) pour décoder le premier signal vidéo selon le premier format de codage vidéo pour générer un signal décodé ;
- un moyen (209) pour extraire des premières données d'estimation de mouvement du premier signal vidéo, les premières données d'estimation de mouvement étant conformes au premier format de codage vidéo ;
- un moyen (211) pour générer des deuxièmes données d'estimation de mouvement à partir des premières données d'estimation de mouvement ; les deuxièmes données d'estimation de mouvement étant conformes à un deuxième format de codage vidéo présentant un jeu d'options d'estimation de mouvement différent de celui du premier format de codage vidéo, et
- un moyen (213) pour coder le signal décodé selon le deuxième format de codage vidéo en utilisant les deuxièmes données d'estimation de mouvement pour générer un signal vidéo transcodé ;
**caractérisé en ce que** le premier format de codage vidéo a une taille de bloc de prédiction possible inférieure à une taille de bloc de prédiction minimum du deuxième format de codage vidéo, le moyen (211) de génération servant à utiliser un premier bloc de prédiction venant des premières données d'estimation de mouvement pour sélectionner un bloc de prédiction plus grand des deuxièmes données d'estimation de mouvement, de sorte que le bloc de prédiction plus grand comprenne le premier bloc de prédiction.

2. Transcodeur vidéo (201) suivant la revendication 1, dans lequel le moyen (211) de génération sert à sélectionner un bloc de prédiction des deuxièmes données d'estimation de mouvement en regroupant une pluralité de blocs de prédiction des premières données d'estimation de mouvement en un groupe et à déterminer un vecteur de mouvement unique pour le groupe.

3. Transcodeur vidéo (201) suivant la revendication 2, dans lequel le moyen (211) de génération sert à déterminer le vecteur de mouvement unique en mettant à la moyenne des vecteurs de mouvement du groupe.

4. Transcodeur vidéo (201) suivant la revendication 2 ou 3, dans lequel le moyen (211) de génération sert à sélectionner des blocs de prédiction candidats des premières données d'estimation de mouvement pour ledit groupement de sorte que les coordonnées d'une partie de chaque candidat coïncident avec le bloc de prédiction des deuxièmes données d'estimation de mouvement.

5. Transcodeur vidéo (201) suivant la revendication 1, dans lequel le moyen (211) de génération sert à sélectionner un sous-ensemble des blocs de prédiction des premières données d'estimation de mouvement et à déterminer un vecteur de mouvement unique pour le sous-ensemble.

6. Transcodeur vidéo (201) suivant la revendication 5, dans lequel le sous-ensemble ne comporte qu'un des blocs de prédiction des premières données d'estimation de mouvement et le vecteur de mouvement pour le sous-ensemble est déterminé à partir de ce bloc de prédiction parmi les blocs de prédiction des premières données d'estimation de mouvement.

7. Transcodeur vidéo (201) suivant la revendication 1, dans lequel le deuxième format de codage vidéo comprend un jeu d'images vidéo de référence possibles différent de celui du premier format de codage vidéo.

8. Transcodeur vidéo (201) suivant la revendication 1, dans lequel le deuxième format de codage vidéo permet d'utiliser pour un bloc de codage un nombre de blocs de prédiction différent de celui du premier format de codage vidéo.

9. Transcodeur vidéo (201) suivant la revendication 1, dans lequel le moyen (211) de génération comprend un moyen de projection d'une première position de bloc d'estimation de mouvement d'une première image vidéo de référence vers une deuxième position de bloc d'estimation de mouvement dans une deuxième image vidéo de référence.

10. Transcodeur vidéo (201) suivant la revendication 9, dans lequel la première image vidéo de référence a une position relative par rapport à une image vidéo à coder différente de la deuxième image vidéo de référence.

11. Transcodeur vidéo (201) suivant la revendication 9, dans lequel la première image vidéo de référence n'est pas voisine de l'image vidéo à coder et la deuxième image vidéo de référence est voisine de l'image vidéo à coder.

12. Transcodeur vidéo (201) suivant la revendication 9, dans lequel le moyen de projection sert à exécuter la projection en mettant à l'échelle au moins un vecteur de mouvement des premières données d'estimation de mouvement pour générer au moins un vecteur de mouvement des deuxièmes données d'estimation de mouvement.

13. Transcodeur vidéo (201) suivant la revendication 6, dans lequel le moyen (211) de génération comprend en outre un moyen pour aligner la deuxième position de bloc d'estimation de mouvement sur une structure de positions de bloc du deuxième format de codage vidéo.

14. Transcodeur vidéo (201) suivant la revendication 1, dans lequel le moyen (213) de codage sert à générer le signal transcodé avec une taille d'image différente d'une taille d'image du signal décodé.

15. Transcodeur vidéo (201) suivant la revendication 1, dans lequel le moyen (213) de codage sert à générer le signal transcodé avec une fréquence d'image différente d'une fréquence d'image du signal décodé.

16. Procédé de transcodage comprenant
- la réception (301) d'un premier signal vidéo codé selon un premier format de codage vidéo ;
- le décodage (303) du premier signal vidéo selon le premier format de codage vidéo pour générer un signal décodé ;
- l'extraction (305) de premières données d'estimation de mouvement du premier signal vidéo, les premières données d'estimation de mouvement étant conformes au premier format de codage vidéo ;
- la génération (307) de deuxièmes données d'estimation de mouvement à partir des premières données d'estimation de mouvement ; les deuxièmes données d'estimation de mouvement étant conformes à un deuxième format de codage vidéo présentant un jeu d'options d'estimation de mouvement différent de celui du premier format de codage vidéo, et
- le codage (317) du signal décodé selon le deuxième format de codage vidéo en utilisant les deuxièmes données d'estimation de mouvement pour générer un signal vidéo transcodé ;
**caractérisé en ce que** le premier format de codage vidéo a une taille de bloc de prédiction possible inférieure à une taille de bloc de prédiction minimum du deuxième format de codage vidéo, ladite génération comprenant l'utilisation d'un premier bloc de prédiction venant des premières données d'estimation de mouvement pour sélectionner un bloc de prédiction plus grand des deuxièmes données d'estimation de mouvement, de sorte que le bloc de prédiction plus grand comprend le premier bloc de prédiction.

17. Programme informatique permettant l'exécution d'un procédé suivant la revendication 16.

18. Support d'enregistrement comprenant un programme informatique suivant la revendication 17.
